# EUROPEAN PATENT APPLICATION

(11) **EP 1 445 726 A1**
(43) Date of publication of application: **11.08.2004**
(21) Application number: 03002519.1
(22) Date of filing: 05.02.2003
(51) Int. Cl.: G06K 9/00

(54) **Integrated system for detecting and matching fingerprints**

(71) Applicant: Salbert Co Ltd, Hong Kong (CN)
(72) Inventor: Jori, Marco, 35143 Padova (IT)
(74) Representative: Reniero, Cirillo Silvano

(57) **Abstract**

A system for obtaining a quality image by the use of at least one biometric capacitive fingerprint sensor having a plurality of capacitive sensor cells arranged underneath a surface of dielectric material (11a) and each including at least one capacitor plate, and a plurality of registers, the system comprises the step of modulating any electromagnetic field generated at each capacitor plate in accordance with worst cleaning conditions of said surface (11a) of dielectric material, thereby obtaining a quality image with a correct contrast between ridge and valley of a detected fingerprint.

## Description

The present invention relates to an integrated system for acquiring and matching fingerprints through a suitable biometric terminal. Such an integrated system can be used for many applications and particularly for enroling and identifying users though their fingerprints and creating a specific biometric data archive.

Problems and limits are currently faced with known biometric technology of detecting fingerprints and comparing them with a specific data archive or store. More particularly, known biometric fingerprint sensing systems are based on two main types of detectors for acquiring fingerprint images and reading them out, i.e. biometric detectors provided with an optical scanner and biometric detectors with capacitive sensors.

Generally speaking, biometric optical detectors are larger in size than biometric capacitive detectors and are thus unsuitable for a number of applications where the overall dimensions of the fingerprint detector are critical, as it is the case with portable phones. Moreover, biometric optical detectors involve large energy consumption, which prevents them from being used in those applications where energy is supplied by battery, high production costs and low safety rate since mere application of a fingerprint photograph on the sensing surface of an optical detector would be a sufficient measure for deceiving the fingerprint acquisition system.

On the other hand, biometric capacitive detectors are quite compact instruments (their dimensions being usually those of a standard postage stamp), require a low energy rate and ensure high safety standards since a biometric capacitive detector is energized and images are acquired through electromagnetic interference that only a live finger can generate.

Capacitive fingerprint scanners comprise a silicon plate which contains a field of small tiny capacitors evenly arranged in a square or rectangular matrix. Generally speaking, rectangular sensor matrices are considered to be more suitable as they better fit the shape of a human fingerprint, which is not square in shape, though. Moreover, the larger the area on which the fingerprint image is red the more information can be obtained.

A protective, usually dielectric, coating covers the silicon field to provide a very hard and resistant layer suitable for protecting the silicon circuits but must be as thin as possible to let the finger come very close to silicon plate. The way in which such capacitors read the ridges and valleys of a fingerprint is based on two different approaches, i. e. passive and active scanning, both based on charging and discharging the capacitor field and reading back the values affected by the distance of the finger skin at each specific point. However, one possible disadvantage is the detector or sensor vulnerability to become damaged by ESD (electrostatic discharge). ESD can be harmful for any silicon component. In presently available sensors, fingerprint scanners are able to withstand electrostatic discharges above 15 kV. A problem is also the fact that electrostatic discharges can affect the c.p.u. of a terminal should the latter be very sensitive to ESD. Touching silicon almost directly brings about a great advantage since it is possible easily to implement additional sensing features which are needed to recognise a real live fingerprint from a fake or dead one.

Both systems and the biometric capacitive detectors in particular, have, however, some drawbacks the most critical of which is poor quality of digital fingerprint images obtained through the biometric detector. Such a drawback is due to the fact that a small layer of dirt (deposition of powders, natural fat present on the fingertips, humidity and the like) is formed on the detector surface, which prevents a biometric image of satisfactory quality suitable for being subsequently processed, e.g. for being set in binary form or for spotting minutiae, from being obtained.

For the purposes of the following description, "setting in binary form" or binarization means changing a grey-scale image into a black and white image. "Minutiae" are characteristic points of a fingerprint to be found at the ending or end point of a finger ridge or at a bifurcation of a finger ridge and are responsible for the uniqueness of each fingerprint. Such minutiae are usually indicated by coordinates x and y giving the position thereof, a third coordinate indicating the vector orientation angle of a minutia, and a fourth coordinate referring to the minutia type, i.e. ridge ending or finger ridge bifurcation.

Thus, what is stored as a biometric datum in a suitable biometric data archive is not a fingerprint, but an alphanumeric or binary code that represents a set of minutiae of the whole fingerprint image.

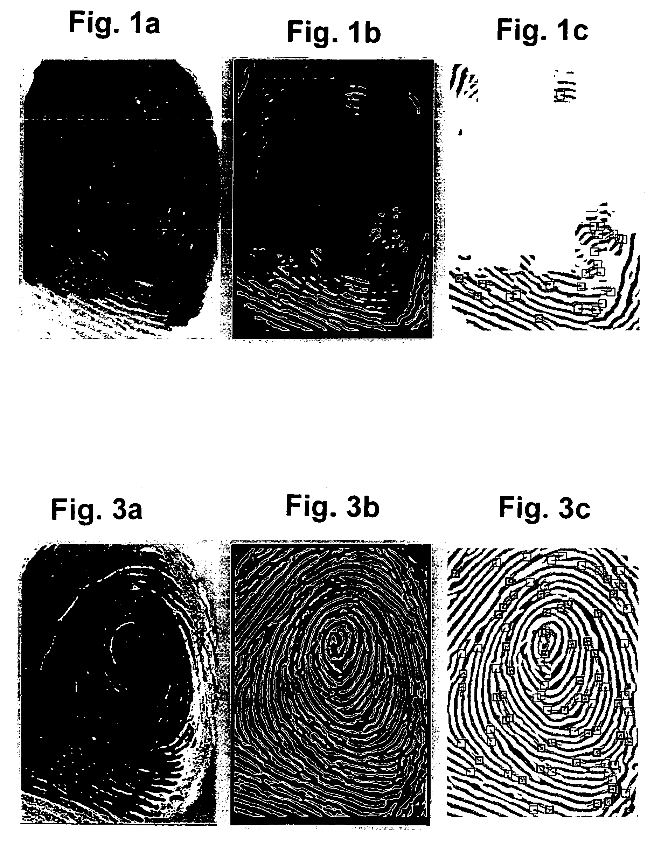

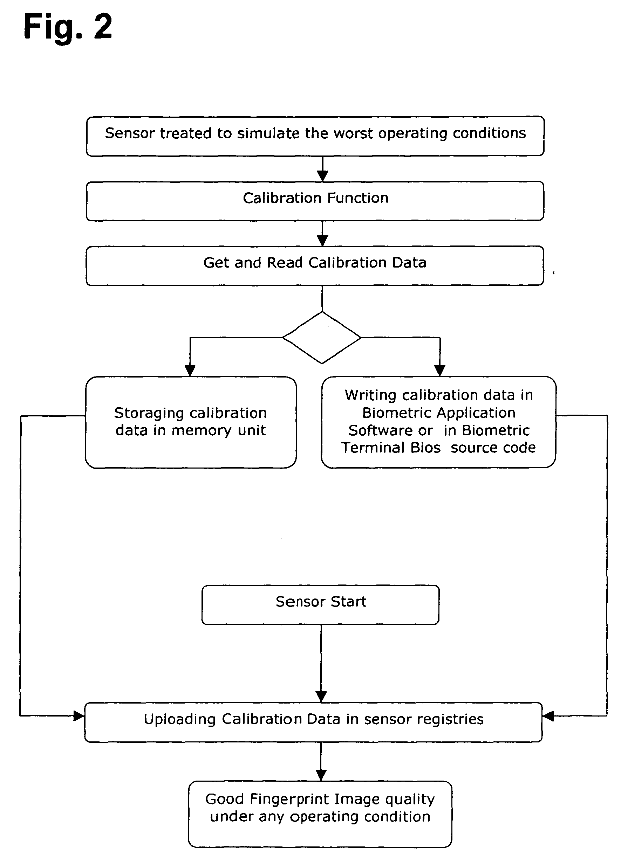

Such serious limitations result in any type of fingerprint identification being highly unreliable mostly due to the following reasons. The fingerprint image obtained through a biometric detector, and more specifically a capacitive one, has wide dark areas owing to interference of the dirt film or layer formed on the surface of the zone designed to acquire the fingerprint. The resulting image obtained from such an acquisition method by means of a suitable biometric detector is then set in binary form through a suitable algorithm and made available for spotting the fingerprint minutiae. To this purpose, a suitable algorithm is used to extract the minutiae from the fingerprint image. However, owing to poor quality of the fingerprint images available (see Fig.1 A, B and C in the accompanying drawings) which shows a sequence of fingerprint images as detected according to a prior art system) the algorithm spots false minutiae, identified as a small squares in Fig. 1 C, that are referred to false finger ridge interruptions or false bifurcations. Moreover, the image in Fig. 1 is partly lacking a substantial fingerprint portion useful in determining important fingerprint minutiae for effecting a correct user's identification. This drawback is responsible for quite serious effects on the identification of a user previously enrolled a biometric data storage.

At best, the user is not recognized despite the fact that his biometric data are available in the data archive. In more technical terms, this kind of failure is referred to as false recognition rate (FRR). At worst, the user's identity is mistaken for another since his fingerprint minutiae spotted by the algorithm do not represent unique and characteristic points of a fingerprint but rather chance points that may correspond to those of many other users in the archive. This kind of error is usually termed false acceptance rate (FAR).

In the above described situations it may even happen that a not enrolled user who places his finger on a biometric detector is given the identity of another already enrolled user whose fingerprints are instead stored in the archive in which a fingerprint search and a matching of biometric data are carried out. A layer of dirt and the consequent deterioration of the resulting image obtained from the capacitive detector are directly correlated to the frequency of use or number of touches on the detector in the environment conditions, e.g. biometrical terminals installed outside a building or in very humid or very dry places, to the wear and dirt rate of user's finger, e.g. in the case of biometric terminals installed in places where users carry out works that leave residues of dirt on their fingers, and to the physiologic type of the fingers, e.g. fingers that naturally release abundant perspiration or are chapped or affected by dryness.

As a matter of fact, wet fingers, especially those wet with perspiration, create a sodden film or layer on the surface of the biometric detector which prevents a fingerprint image of satisfactory quality from being obtained (see Fig.1).

On the contrary, particularly dried fingers also give rise to poor quality images as they do not provide a sufficient level of electrical conductivity. Accordingly, if a biometric capacitive detector were used, electromagnetic interference capacity of a particularly dried finger is insufficient to generate a fingerprint image of acceptable quality to be used for identification purposes.

The above described difficulties make it impossible at the present state of the art to manage a biometric data archive including more than 50 users with two enrolled fingerprints per user. This is the case when the sole user's identification means is a fingerprint. Biometric terminal systems used at present provide for the storage of a precautionary alphanumeric code through a suitable small alphanumeric keyboard in order to compare the fingerprints in the data archive with a stored code.

In such a case the number of fingerprints that can be stored in the data archive could be much higher than 100 as previously indicated, but unless one resorts to some other expedient a sufficiently safe and quick user's identification would be impossible. Identification difficulties still persist also when resorting to fingerprint matching stratagems 1 to 1 as mentioned above since in any case a poor quality image makes it difficult to obtain any kind of recognition since FRR-type of errors are caused in this case, and the more so when carrying out fingerprint matching in operations 1 to many where besides FRR-type of errors also much more serious FAR-type errors are likely to occur.

Moreover, it should be noted that most of the biometric systems are of stand alone type, i.e. they include not particularly powerful processors, such as those provided in a pc or a server and thus the times of comparison among data archives or banks of given dimensions where biometric data are locally stored would be unacceptable with the presently available matching algorithms and systems. In addition, such image quality limitations make it difficult if not impossible also to enrol users having ruined or odd fingers for whom the use of such technology would be prevented.

Two further problems heavily affecting the performance of a biometric system or terminal are, respectively, the position and the way in which a finger is caused to rest on the biometric detector and the search times taken for spotting biometric data of a given user in an biometric data archive of relatively large dimensions and their respective FAR and FRR errors. Particularly critical are to be considered the way and the position in which the user touches the biometric detector.

Tests on more than 10,000 user have shown that users face great difficulty in putting their finger in a correct position on the fingerprint detector. Correct position is meant to indicate a proper location of the fingertip with respect to both sensor axes thereby causing the fingerprint core to occupy the sensor centre so as to detect a maximum number of fingerprint minutiae. It is very important that finger position is always the same even in so far as the finger inclination with respect to the sensor axes is concerned. As a matter of fact, the greater the finger inclination with respect to the sensor axes the lower the safety level of the system, when the fingerprint of the same user had been detected and stored while the user's finger was correctly positioned with respect to the sensor centre since the matching algorithm could consider as true any correspondence between minutiae that in fact are not true at all. The matching algorithm in fact compares two point templates, one template dealing with fingerprint sensing and the other fingerprints stored in the database. Should the sensed point template, even if rectified and accurate, be rotated through a certain angle, it becomes impossible to establish a correct correspondence between two point templates concerning minutiae and it is necessary to set the matching algorithm so that matching within a predetermined inclination range between the two point templates can be effected. Such a system is very dangerous for the reasons mentioned above and significantly slows dawn the matching operations owing to the need of carrying out a much higher number of mathematical operations to operate matching between templates with a wide inclination or rotation range, generally extending from 10 degrees to about 45 degrees.

Moreover, critical is also the pressure at which a finger is placed onto the fingerprint sensor. As a matter of fact, a pressure in excess would deform the image, which would then differ from that stored in the database and thus become responsible for extracting false minutiae. On the other hand, a too low pressure would prevent a sufficiently wide image from being detected which would make it impossible to withdraw a sufficiently high number of minutiae.

The main object of the present invention is to provide a biometric integrated system for identifying a user through his fingerprints, suitable for eliminating or substantially reducing the above described drawbacks in relation to prior art identification systems.

Another object of the present invention is to provide a fingerprint sensing apparatus arranged to ensure correct positioning of a user's finger on a biometric capacitive sensing device and relatively large flexibility in the location of such sensing apparatus in relation to a processing unit.

Another object of the present invention is to provide a specific method designed to deal with management and optimisation of images developed by the said biometric capacitive sensing device.

According to a first aspect of the present invention there is provided a biometric integrated system including a biometric database, at least one biometric capacitive fingerprint sensor having a plurality of capacitive sensor cells arranged underneath a surface of dielectric material and each comprising at least one capacitor plate, characterized in that each biometric fingerprint sensor comprises a protection case, a swinging frame supported in said protection case and arranged to be angularly moved between an inoperative stand-by position and an operating position in which the said fingerprint sensor is facing a user's finger

According to another aspect of the present invention there is provided a method of obtaining a quality image by the use of at least one biometric capacitive fingerprint sensor having a plurality of capacitive sensor cells arranged underneath a surface of dielectric material and each comprising at least one capacitor plate, and a plurality of registers, characterized in that it comprises the step of modulating any electromagnetic field generated at each capacitor plate in accordance with worst cleaning conditions of said surface of dielectric material, thereby obtaining a quality image with a correct contrast between ridge and valley of a detected fingerprint.

The method according to the present invention implies a specific algorithm, hereafter briefly termed "OPTIMIZE", for the acquisition and optimisation of images relating to capacitive biometric sensors, e. g. sensors manufactured by STMicroelectronics, Inc. Texas (USA), hereafter briefly "ST".

The "OPTIMIZE" algorithm has been developed in order to solve most of the above outlined problems in relation to the quality of an image acquired by means of a capacitive biometric system.

The adopted technique is based on the use of hardware supports generally provided in capacitive biometric sensors presently available in the market.

Each capacitive biometric sensor equipped with an active scanning means operates as follows. Each sensor cell includes both plates of a capacitor connected to an active capacitive feedback circuit through an inverter (inverting amplifier) thus forming a charge integrator; one capacitor plate being connected to the inverter input and the other plate to the inverter output. A charge integrator is provided whose function is to convert any feedback capacitance to an output voltage which can be digitised. An active sensor also operates in two phases. In the first phase, a reset switch shortens the inverter input and output in order to settle on an initial value. In the second phase, the reset switch is opened and a calibrated charge is used for charging the capacitor plate, which is connected to the integrator input. An electromagnetic field is generated between the capacitor plates. The skin of the fingerprint interferes with the electromagnetic field causing a change in the effective capacitance. Depending on the presence of the fingerprint ridge or valley, the feedback capacitance is minimised or maximised, respectively. The resulting feedback capacitance is then digitised.

On the other hand, the operation of a capacitive sensor equipped with passive scanning means operates as follows. Passive silicon scanners include only one plate of each capacitor. The fingerprint being scanned then constitutes the other capacitor plate. Scanning occurs in two phases. First the capacitors are pre-charged. In the second phase, the row of sensor plates are discharged with a current source and a second set of sample-and-hold circuits store the final value. The difference between the stored pre-charged and discharged plate voltages is a measure of the capacitance of a sensor cell. After the row capture, the cells within the row are digitised.

According to the present invention there is obtained a qualitatively superior image by a specific modification in the charge used for charging each capacitor plate and the charge input to each image pixel. Thus, the electromagnetic field produced between the two plates of the capacitor of each sensor cell is modulated depending on the presence of a film of dirt or an aqueous film on a surface or plate of dielectric material covering the sensor cells, thereby obtaining a qualitative image anyway with a correct contrast between ridge and valley of the fingerprint. Thus, the problem of image quality is solved before the analogical signal of each cell is digitalized; digitisation procedure being normally performed through suitable software filters according to standard procedures for the capacitive biometric sensors available on the market.

The procedure to obtain correct charge intensity for each of the capacitor plates and the correct charge input to each image pixel is based on sensor's calibration on whose protection surface of dielectric material a consistent dirty film or alternatively an aqueous film is present. Thus, a suitable software calibration procedure aimed at reading the average grey levels for each pixel associated with each sensor cell or the charge input and output for each image pixel makes it possible to modulate and correct the charge intensity for each capacitor plate and the charge input to each image pixel adding correction factors in the integrated registers of the sensor.

As a consequence, one can obtain the acquisition of a fingerprint image even under critical conditions and still keep a correct contrast between ridges and valleys. This is highly advantageous in order to operate a correct binary sequential procedure for the image in order to obtain a precise identification of the fingerprint minutiae. To this end, different calibration procedures can be adopted.

A preferred procedure is based on a calibration operation, preferably according to active scanning principle, of a sensor whose protection surface of dielectric material was adequately treated or set to simulate critical conditions relatively to dirt or aqueous deposit on it, followed by the acquisition of correct or adjusted values of charge intensity for each capacitor plate.

There are different calibration procedures. A preferred solution is either to bring about a calibration procedure, preferably according to active scanning principle, of one sensor whose protection surface of dielectric material has been treated in order to mimic critical conditions as regards the presence of dirty or aqueous deposits on the surface, to acquire the correct and adjusted values for each capacitor plate or charge input to each pixel suitable for keeping a sufficient contrast between ridges and valleys, and register them in a suitable memory unit, or in a simpler way to import directly the same values within the code source of BIOS or the software controlling the capacitive sensor, and consequently insert the same values into the integrated registers of the same sensor as well as of any other sensors of the same species at each start. The software procedure which loads the calibration values on the sensor is carried out by suitable software drivers whose function is both to allow the communication between the sensor at an hardware level and specific processing units, and to load in the hardware registers of the sensor, whose role is to define the correct charge intensity for each capacitor plate and the fixed charge input to each pixel, the values previously acquired during the calibration phase.

Loading the values acquired from the calibration procedure in the sensor registers is advantageous since it yields a qualitatively acceptable fingerprint image both in the presence of standard environmental conditions, where the sensor surface remains essentially clean and is not subjected to any particular deterioration due to high utilization frequency, and under any sensor operating condition and with all types of skin quality.

Moreover, the system according to the present invention utilizes standardized values to optimize the acquisition of a fingerprint image under any operating condition and with all types of skin quality, and makes it possible to avoid complicated procedures which would require close interactivity between sensor and a processing unit aiming at adjusting the quality parameters within the sensor in real time and in a different mode for each touch of a given user, i.e. with the integrated sensor adjustments to control image sharpness, brightness and contrast.

For any capacitive sensor of the same kind under any operating condition it is actually possible constantly to set the same values acquired by the calibration carried out on a suitably treated sensor in order to return the best values which allow the acquisition of a qualitative image even under the most difficult operating conditions, thus simplifying any related or additional operation and eliminating superfluous calculations to be performed in a different mode for any subsequent fingerprint scanning for the application of software filters aimed at optimising the fingerprint image.
In any case, the use of the innovative technique according to the present invention does not preclude the use of software filters, they are rather no longer necessary.

The solution according to the present invention significantly differs from that disclosed in the WO-98/52135 patent to Veridicom Inc., since the technique disclosed in such a patent is based on the use of well-known techniques in digital photography to determine whether the image of a fingerprint acquired by a passive scanning principle sensor is of sufficient quality for identification purposes. As a consequence, such an operation becomes complicated owing to the amount of hardware resources required in digital photography and graphic techniques. Moreover, such an operation also has some limitations since it requires the presence of processing and control processors sufficiently powerful to allow these techniques to be carried out, and thus it cannot be performed with sufficiently effective results also in those solutions where one utilizes stand-alone biometric terminals or network biometric terminals equipped with less powerful processing and control processors than those which are typical of a classic PC or Server. Such an operation also exhibits little flexibility as regards the software and hardware architectures required for the numerous operations of iterative adjustments until a satisfactory fingerprint is acquired. Moreover, the technique proposed in the above mentioned prior art patent document yields poorly reliable results, because the acquisition of the fingerprint is dependent each time on variables which make it difficult to elaborate parameters of a uniform and acceptable quality every time and under any set of conditions.

OPTIMIZE algorithm directly sets in advance such quality and reliability parameters during the design phase thereof and at the start of the biometric sensor, thereby obtaining a high level of certainty in the results even when the variables of the acquired fingerprints change with time and events.

A hardware apparatus according to the present invention is designed to support a finger in a correct position on the fingerprint sensor, to protect the sensor from harmful impacts, vandalism actions, electrostatic discharges (ESDs), electromagnetic energy and weather inclemency, to set specific and efficient arrangements of fingerprint sensor with respect to a control unit, and to provide an integrated security system having high standard security and performance levels owing to integration of e.g. a keyboard, smart card, badge, transponder or telecamera.

The apparatus for correct positioning of a finger on the sensor and protecting the fingerprint sensor comprises a protection case or enclosure , a support member mounted for rotation on said case and carrying a fingerprint sensor secured thereto so that it can swing about a pivot pin, and at least one alarm means, e.g. a buzzer or sound speaker, suitable to alert a user about the enrolment and identification procedures and the image quality.

An access area, preferably made of a conductive material, can be suitably provided close to, and upstream of, the fingerprint sensor to ensure correct touch of a user's finger and guidance for subsequent rotational movement of said support member together with the fingerprint sensor.

Advantageously, the biometric fingerprint sensor is secured to on the support member which, in turn, is disposed in the said case in order to protect the fingerprint sensor and is swinging or angularly displaceable between an inoperative position within the case and a working position, in which the fingerprint sensor is exposed to the user's finger. To gain access to the fingerprint sensor, a user puts his finger preferably on a suitable access area provided on the protection case close to the said swinging support member and pushes against an abutment wing or tab rigid with, or secured to, the support member in order to cause it to be angularly displaced to its working position.

Such an apparatus and method for correct positioning a user's finger on a fingerprint sensor and protecting the fingerprint sensor inventively differs from the device and method disclosed in the prior art document WO-00/21439-A in the name of Veridicom Inc., where a sensor is provided which is fixedly secured onto a protection enclosure and a spring loaded sliding access piece or sliding door located on the protection enclosure above the fingerprint sensor and displaceable between a closed sensor covering position and an open position away from the sensor to fully reveal the fingerprint sensor, e. g. to a finger disposed on the sensor.

According to the present invention a fingerprint sensor is supported on swinging support member and thus the sensor itself is angularly displaced, in use, between a closed position and an open position. A suitably shaped access area is arranged to guide the user's finger for touching the support member wing and for causing the support member and thus the fingerprint sensor to tip or swing so as gradually and correctly to expose the dielectric surface of the capacitative sensor to the operating finger.

A system according to the present invention gives the possibility of laying automatically the user's finger on the core of the sensor without causing sliding of the finger with respect to the capacitative sensor so as to detect the core of a fingerprint with a correct and always at substantially the same pressure of the user's finger on the sensor. It is the sensor that progressively leans itself against the user's finger while following a round swinging movement. In this way, the finger does not cause any friction during the wing or tab pushing phase, that would otherwise deform the fingerprint image and cause faster wearing of the sensor, as it is the case with Veridicom's system.

The system according to the present invention specifically ensures automatic correct inclination of the sensor in relation to the position of the finger. As a matter of fact, many tests have shown that in general for a large number users it is rather difficult to find a correct and natural finger position on the sensor, since prior art biometric sensors are located in a fixed position, and thus the user is not in a position to adapt properly the position of his/her finger with respect to the position of the sensor.

To avoid this drawback according to the present invention there is provided a swinging sensor support member or unit customizable to any kind of user's necessity, since the swinging unit positions itself automatically in a wide range of relative, either aligned or inclined, positions. Accordingly, the present invention aims to provide an apparatus suitable for ensuring correct positioning of user's finger and protection for the sensor.

Moreover, according to the invention there is provided a system for controlling two or more fingerprint sensors by means of one control unit. This system is suitable i.e. to control user's way in and way out through one biometric terminal e. g. by controlling two or more biometric sensors through two or more ports of a CPU in the biometric terminal, thus avoiding the need of a second biometric terminal.

Further aspects and advantages of the present invention will better appear in the following detailed description of some currently preferred embodiments of, given as illustrative and not limiting examples with reference to accompanying drawings, in which :
Figures 1A, B and C show a sequence of three images of a fingerprint as detected by a conventional capacitative sensor;
Figure 2 is a flow chart showing a software showing the sequence of steps for carrying out the method according to the present invention;
Figures 3A, B and C illustrate a sequence of three images of a fingerprint as detected by means of the software algorithm and apparatus according to the present invention;
Figure 4A shows a flow chart illustrating a first way of use of the algorithm software according to the present invention;
Figure 4B shows a flow chart illustrating a second way of use of the software algorithm according to the present invention;
Figure 4C shows a flow chart illustrating a third way of use of the software algorithm according to the present invention;
Figure 5A and 5B show flow charts of OPTIMIZE algorithm according to the present invention;
Figure 6 illustrates a perspective view of the hardware apparatus for acquiring fingerprint images according to the present invention;
Figure 7 is a diagrammatic longitudinal cross-section view of the hardware apparatus of Fig. 6 showing sensor support member in its inoperative position;
Figure 8 shows a modification of Fig. 7;
Figure 9 is a view similar to that of Fig. 8 with sensor support member rotated to its operating position;
Figure 10 is a perspective view on a slightly reduced scale of a rotating sensor support member;
Figure 11 shows a block diagram of a biometric terminal according to the present invention;
Figure 12 shows the diagram of Fig. 11 with modifications;
Figure 13 illustrates a presently preferred embodiment of a system for inlet and outlet door opening;
Figure 14 shows a preferred embodiment of a system for guiding a finger in an electric switch support;
Figure 15 is a view similar to that of Fig. 14 including a wireless communication between a finger support and a biometric terminal; and
Figure 16 shows a flow chart for user's enroling, identification and access operations.

In the accompanying drawings the same or the like components have been indicated with the same reference numerals.

With reference first to the flow chart shown in Fig.2, in order to carry out the method according to the invention the following sequence of steps is follows. Initially he surface of the fingerprint sensor is treated to mimic the worst operating conditions of use. A calibration procedure is then executed to determine the correct values of charge intensity for each capacitor plate and charge input to each image pixel suitable for keeping a sufficient contrast between ridges and valleys of the user's fingerprint.

All the values thus obtained can be stored in a memory unit which can be a flash memory, e. g. disposed in a biometric terminal equipped with CPU, or a hard-disk of a PC, i.e. if use is made of a USB fingerprint reader.

In a preferred embodiment of the invention, the values obtained through calibration operation are directly written inside the source code of the BIOS, when using a biometric terminal equipped with a control processing unit, or they can be written directly inside the source code of the biometric application software which controls the sensor by means of a PC control processing unit, if use is made of a USB fingerprint reader.

In both solutions, as the storage of calibration data into a memory unit or as the transcription of the same data into the source code of the software which controls the sensor, at the start of the biometric sensor, the adjusted values and data of the calibration are uploaded into the sensor registries at every start.

Thus the capacitative fingerprint sensor is suitable for acquiring and scanning a fingerprint image which is always a quality image under any operating condition.

In another preferred embodiment, the same calibration data and values can be set, in the production factory of the sensor, into the registries of the sensor, according to a single chip sensor, equipped with its own control processors unit.

With reference to Figs. 1A, B, C and 3A, B and C, it will be noted a remarkable difference between the image 1A, 1B and 1 C acquired by conventional systems and the image 3A, 3B and 3C acquired by the algorithm "OPTIMIZE" according to the present invention. More particularly, algorithm "OPTIMIZE" can acquire a good image of a completely wet finger, and at the same time keep a sufficient contrast between ridges and valleys of the fingerprint, thus allowing a correct and good binarization and minutiae extraction to be obtained.

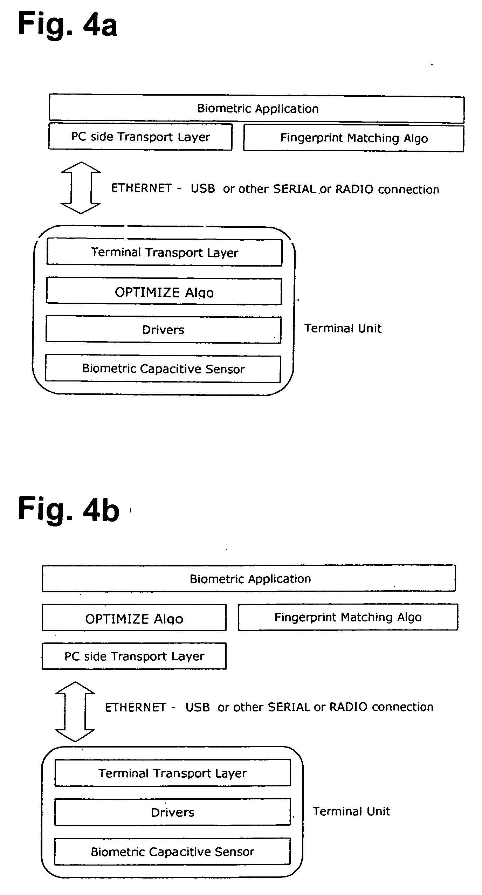

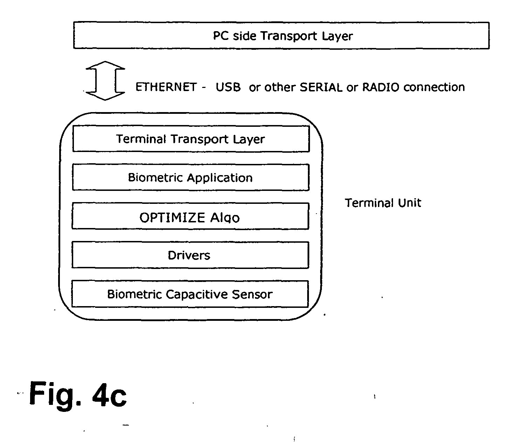

Figs. 4A, B and C illustrate specific ways of application of the algorithm "OPTIMIZE" according to the invention.

As shown in Fig. 4A, the algorithm "OPTIMIZE" is executed directly in a biometric terminal. This is a solution according to network biometric terminals, interfaced by Ethernet network, RS485, RS232 or other radio or telecommunication network, where the acquisition and scanning of the fingerprint are executed in the terminal whereas the matching functions are carried out by a remote control processor unit, e. g. a PC or Server.

According to Fig. 4B, the algorithm "OPTIMIZE" is executed directly in a PC which controls the fingerprint sensor. This is a solution e. g. according to USB fingerprint reader controlled by a PC.

In Fig. 4C the algorithm "OPTIMIZE" is directly executed in the biometric terminal but a difference exists with Fig. 4A, namely all binarization and matching functions are executed in a biometric terminal, i. e. a stand-alone biometric terminal.

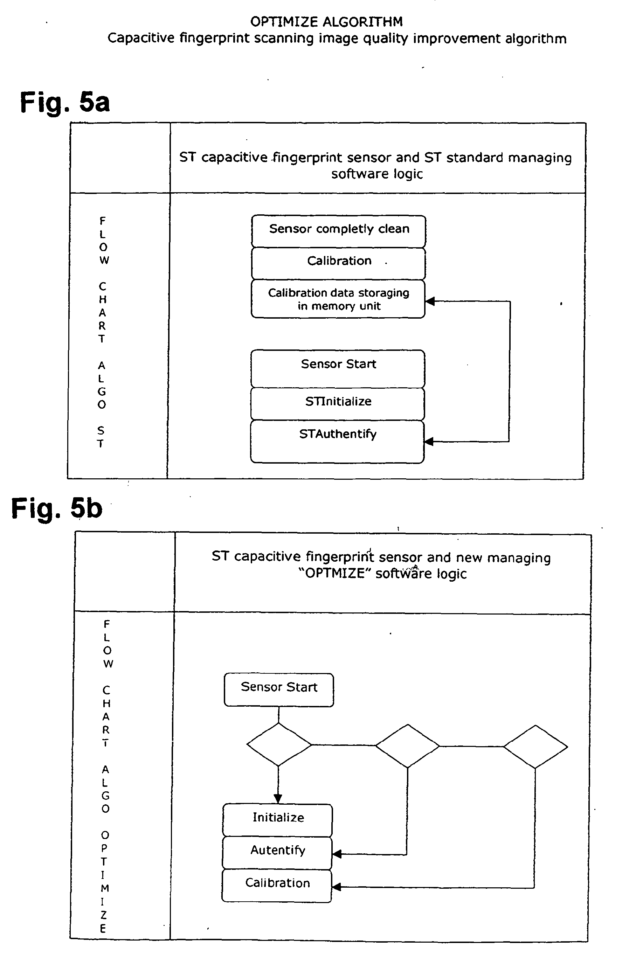

Fig. 5 illustrates a comparison operation made between (a) a technique supported by ST for the managing and piloting of a biometric capacitive silicon sensor produced by the ST, and (b) a technique based on the "OPTIMIZE" algorithm related to the same sensor ST.

As shown in the flow chart of Fig. 5A, ST suggests to execute the calibration in every new previously non-employed sensor whose dielectric protection surface must be perfectly clean, suggesting also to take care not to lay the finger onto the sensor during the calibration phase.

Calibration based on the ST procedure has the goal to adjust possible silicon imperfections which might be responsible for the presence of bad columns and bad rows in the sensor.

Lastly the calibration data are saved in a memory unit. At every start of the sensor, after the execution of the STlnitialize function, which initializes the data needed to access the sensor, the previously saved data of the calibration are utilized for and processed by the function STAuthentify, which sets the registries of the sensor at particular values and settings.

Therefore, this function, which initializes the sensor and puts it in an active state, does not upload the calibration data directly into the sensor registries, but utilizes these data simply as reference for calculating some parameters and settings which the same STAuthentify function subsequently initialises in the sensor.

Moreover, the calibration procedure suggested by the ST is executed in each new and perfectly clean sensor, thus assisting in achieving values useful for scanning and acquiring fingerprint images which are always of high quality in every operating condition.

In addition, the calibration procedure suggested by the ST is executed for every new sensor, and thus the acquired data concerning a specific sensor are actually exclusively and strictly in relation to a specific sensor.

Furthermore, executing the calibration with the ST procedure in a sensor specifically treated to simulate the worst operating conditions as in the procedure supported by "OPTIMIZE" algorithm, and using data and values obtained from the calibration based on ST procedure, which supports the data stored in a memory unit and their utilization by the function STlnitialize, the consequent results are not anyway appreciable and not at all comparable with the results obtained by the procedure based on the "OPTIMIZE" algorithm.

As shown in the flowchart in Fig. 5B, the "OPTIMIZE algorithm" supports exact uploading of the values obtained by calibration executed in a sensor whose surface has been specifically treated to simulate the worst operating conditions, in the sensor registries. This operation can be directly executed at the start of the sensor while excluding the execution of any other function such as the STAuthentify or STlnitialize or alternatively after one or both functions of STAuthentify or STlnitialize, thus excluding the reading procedure by the STInitialize of the memory unit where the calibration values are stored on the basis of ST procedure.

In any case, the preferred solution is always the direct loading of the calibration values obtained by the procedure based on the OPTIMIZE algorithm on the sensor at each start, via either source code or memory unit, thus simply excluding the STAuthentify or STlnitialize, which are not useful for the final performance of the sensor.

Furthermore, the same calibration values obtained by a single sensor always applies for all other sensors, and there is no need to repeat the calibration procedure for each new sensor.

Lastly, even if the calibration is executed with a finger on the ST sensor, the resulting data do not affect the reliable result provided by the procedure based on the OPTIMIZE algorithm.

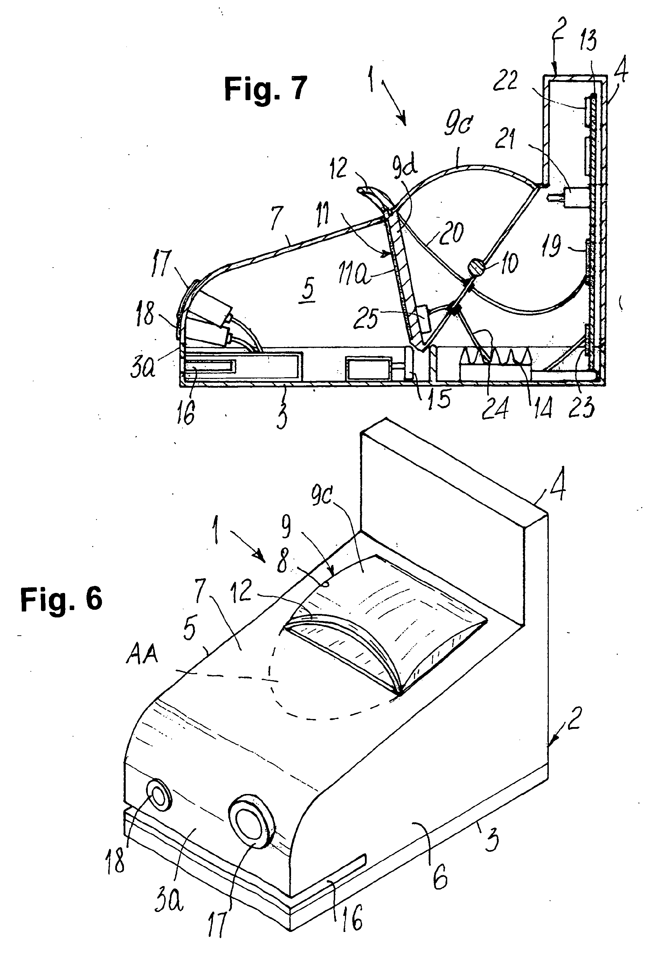

As shown in Figs. 6 to 10, a biometric sensor apparatus 1 according to the present invention for correct positioning of a finger on a fingerprint sensor comprises a case or box-like enclosure 2, e.g. having a bottom wall 3, a front wall 3a, a rear wall 4, a left side wall 5, a right side wall 6 and a top wall 7. An aperture or window 8 is formed in the top wall 7 for access to the inside of the case 2. A support member or swinging frame 9 is mounted for rotation in the case 2 about a transverse pivot pin 10 and is preferably shaped like a drum sector with a pair of plane side walls 9a, 9b connected to each other by a curved bridging wall 9c and a transverse plane wall 9d which along its edge adjacent to the curved wall 9c extends outwardly with a wing or tab 12, preferably having its surface facing towards the front wall 3 concave in shape (Fig. 7). A capacitative fingerprint sensor 11 is secured to the outer surface of the transverse plane wall 9d and has a covering or protection surface 11 a of a dielectric material designed to get in contact with user's finger. The weight of sensor 11 and plane wall 9d is such as to normally keep the rotating support member 9 in its inoperative position, i. e. with sensor 11 facing the inside of the case 2 and its curved wall 9c facing outwards at the opening 8, thereby fully closing the window 8. Alternatively, a suitable return spring could be provided in any suitable manner.

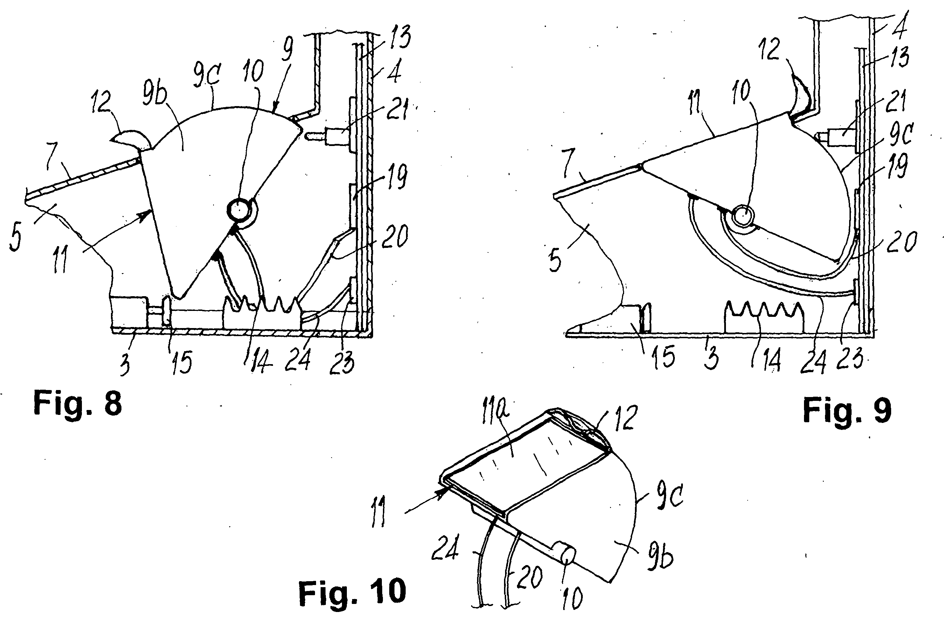

The overall dimensions of sensor 11 are such as to fully occupy and close the aperture 8 when the support member 9 is caused to be angularly displaced to its operating position by a user's finger tip pushing onto the tab 12 (Fig. 9).

If desired, an access area AA, preferably made of a conductive material, is suitably provided close to, and upstream of, the fingerprint sensor, e.g. adjacent to tab 12, also made of conductive material, when the support member 9 is in its inoperative or resting position in order to ensure correct touch of a user's finger and guidance for subsequent rotational movement of the support member 9 together with the fingerprint sensor 11.

The case 2 advantageously locates an interface card 13, e.g. arranged along the rear inner wall 4, and on the bottom wall 3 at least one electric resistor 14 arranged to keep the apparatus temperature above a predetermined temperature threshold, an electrically operated locking device 15 for the support member 9, and preferably arranged on the front wall 3a either a smart card reader 16, and/or a telecamera 17 and/or a radio transponder sensor 18. The smart card reader 16, the telecamera 17 and radio transponder sensor 18 constitute a further user's identification means quite useful in that it provides a confirmation as to the identity or authorization of a user and ensures a preventive connection of the locking device 15 and thus, should the module be arranged outside, it is protected against aggressions or unauthorized manipulation.

Interface card 13 includes a ground connection ESD19 which through a cable 20 is connected to the tab 12 and thus to the wall 9d and the access area AA, if any, a start switch 21 arranged to start the routine of fingerprint sensor 11 as soon as the support member is angularly moved to its operative position in which tab 12 engages start switch 21 in order to synchronize the acquisition phases in an optimum way, at least one alarm means 22, e.g. a buzzer or sound speaker, suitable for alerting the user about the enrolment and identification procedures being carried out and the quality of fingerprint image on the process of being acquired, and a serial connection 23 to the sensor 11 through a cable 24 and serial connector 25.

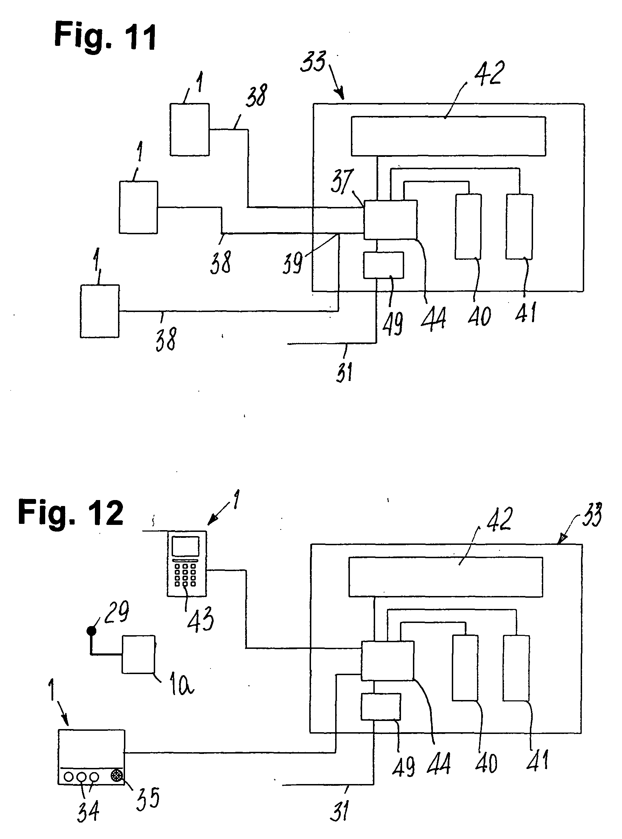

A biometric terminal 33 is diagrammatically shown in Figure 11 and provided with a display 42 a c.p.u. 44, one or more RAM memories 41 and one or more FLASH memories 40 connected to the c.p.u., and a relay 49 with a respective cable 31, the terminal being arranged to control two or more biometric sensor apparatuses 1 for supporting and guiding a user's finger, each connected to a serial connection 38. The biometric sensor apparatuses can be suitably placed at different places or areas one with respect to the other, e.g. to be able to control data from sensors 11. Sensors 11 can be controlled through two different ports 37 of the same c.p.u. or are connected in parallel as indicated at 39 through the same port 37.

Figure 12 shows the same block diagram of Fig. 11 incorporating some further components to integrated in the system. More specifically, there is provided a keyboard 43 incorporated in a biometric sensor apparatus 1 and designed to digit a preventive code arranged to unlock the locking device 15 to set, upon control, the support member 9 free to rotate. The sensor apparatus 1 will have a higher safety level if the user's fingerprint is accompanied by a personal identification pin and/or luminous leds 34 are provided in the support member 9 and a speaker or buzzer 35 is designed to instruct the user while carrying our the identification process and/or a wireless module 1 a is provided for interfacing fingerprint sensor 11 to the c.p.u. through antenna 29 with no need to provide wiring harness.

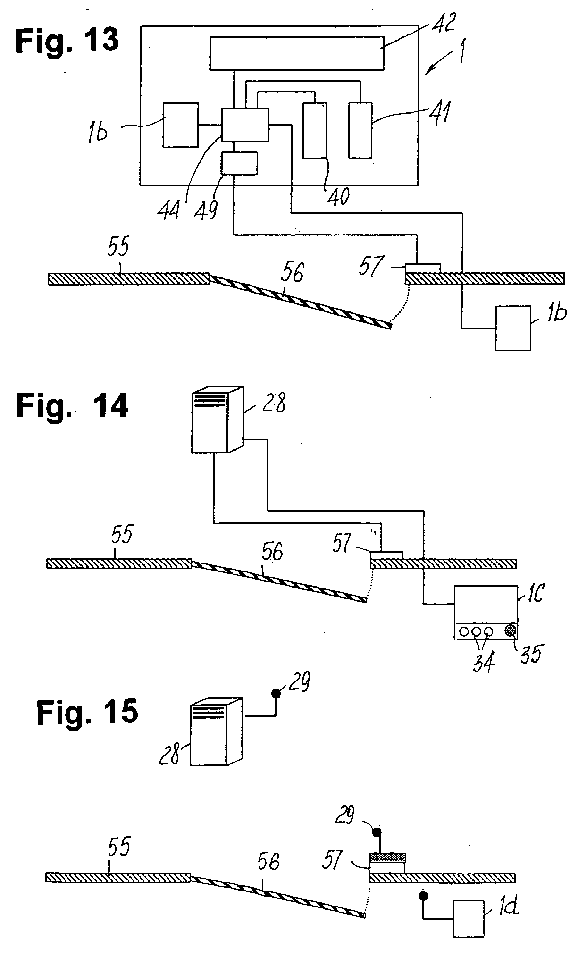

A preferred embodiment for controlling closing and opening of a door 26 provided with an electrically operated lock 57 and mounted in a (partition) wall 55 is shown in Fig. 13. A first biometric terminal 1 b including a sensor 11 and its respective support member 9 is provided on one side of the wall 55 and a second biometric terminal 1 b is suitably arranged on the other side thereof. The lock 57 is electrically connected to relay 49 which, in turn, is controlled by c.p.u. 44, only when a user has been identified. For safety reasons the sensor apparatus 1 and relay 19 are arranged at the inner side of the area to be accessed.

Of course, terminals 1b can include smart card reader 16, a telecamera 17 and/or a radio transponder sensor 18, as shown in Figs. 6 and 7. When using a telecamera 17 it is possible to register the image of a user and if the software scans the image and finds it to correspond to a specific fingerprint, e. g. by providing a face recognition software of any suitable type, the biometric terminal 1b unlock the locking mechanism 15, thereby making it possible to acquire a digital fingerprint. Such a system could be used for gaining access to a bank, protected areas, shops and the like and/or as a biomertric data acquisition system for storing images of users, customers, etc. to be stored in a data base (e.g. a police data base) to be available for subsequent identification, if required.

Figure 14 shows an embodiment in which a sensor terminal 1c is provided and received in a standard electric switch case 1c . In this case the user is guided by luminous leds 34 and possibly by a buzzer 35.

In the embodiment shown in Fig. 15 is similar to that of Fig. 4, except that communication between a sensor terminal 1d and a c.p.u. 44 is wireless through antennae 29.

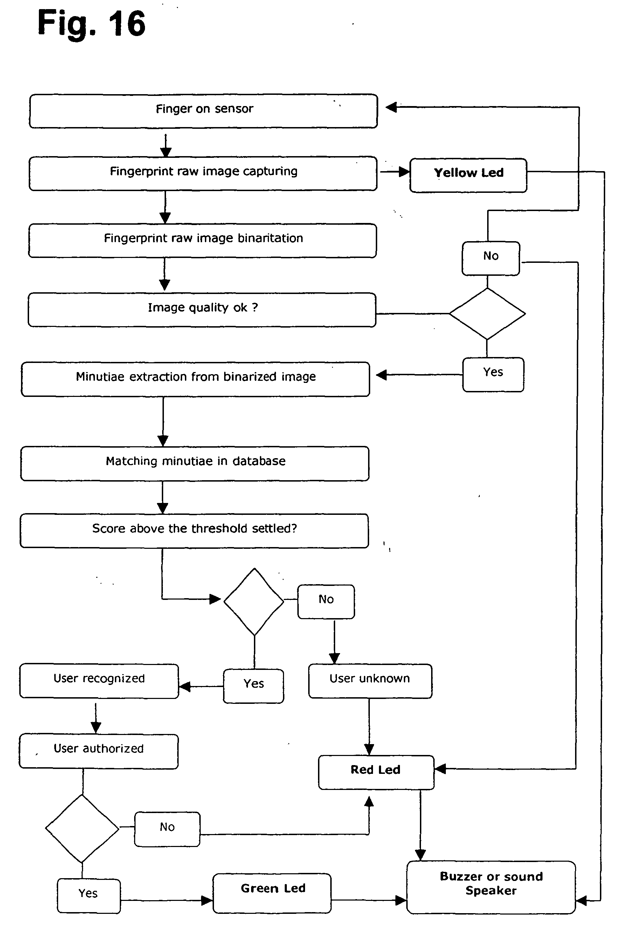

A suitable software for carrying out enrolment, identification and access operation is illustrated in Fig. 16.

The invention as described above is susceptible to numerous modifications and changes within the scope defined by the claims.

## Claims

1. A method of obtaining a quality image by the use of at least one biometric capacitive fingerprint sensor having a plurality of capacitive sensor cells arranged underneath a surface of dielectric material and each comprising at least one capacitor plate, and a plurality of registers, **characterized in that** it comprises the step of modulating any electromagnetic field generated at each capacitor plate in accordance with worst cleaning conditions of said surface of dielectric material, thereby obtaining a quality image with a correct contrast between ridge and valley of a detected fingerprint.

2. A method as claimed in claim 2, **characterized in that** the said modulation step comprises
- executing a calibration procedure by means of a capacitative fingerprint sensor set to simulate the worst operating conditions, said calibration procedure being designed to obtain correct values of electric charge intensity for each sensor cell corresponding to one image pixel under said worst cleaning conditions, thereby ensuring good contrast between ridges and valleys in a fingerprint image,
- storing said correct values in a memory system, and
- uploading calibration data in said sensor registers at each start of said fingerprint sensor.

3. A method as claimed in claim 2, **characterized in that** the said memory system comprises a flash memory controlled by a c.p.u.

4. A method as claimed in claim 2, **characterized in that** the said memory system comprises a hard disk in a PC.

5. A method as claimed in claim 2, **characterized in that** said memory system comprises a software source code.

6. A method as claimed in any preceding claim 2 to 7, **characterized in that** the said calibration procedure is carried out according to a software wherein
- each capacitor plate charge intensity is associated with a grey level of each image pixel, and
- the said charge intensity of each capacitor plate is modulated and adjusted to obtain a correct average grey level of each image pixel..

7. A method as claimed in claim 7, **characterized in that** the said charge intensity is modulated and adjusted according to correction factors.

8. A method as claimed in claim 6 o 7, **characterized in that** the said calibration procedure comprises
- setting the said dielectric surface so as to simulate worst cleaning conditions,
- acquisition of correct or adjusted values of charge intensity for each capacitor plate suitable for keeping a good contrast between ridges and valleys whereby obtaining a quality fingerprint image, and
- registration of the said adjusted values in a suitable memory system or software source code.

9. A method as claimed in claim 8, **characterized in that** the said adjusted values are uploaded into said sensor registries at each start of the fingerprint sensor.

10. A biometric integrated system including a biometric database, at least one biometric capacitive fingerprint sensor having a plurality of capacitive sensor cells arranged underneath a surface of dielectric material and each comprising at least one capacitor plate, **characterized in that** each biometric fingerprint sensor (11) comprises a protection case (2), a swinging frame (9) supported in said protection case (2) and arranged to be angularly moved between an inoperative stand-by position and an operating position in which a fingerprint sensor (11) is facing a user's finger

11. A biometric integrated system as claimed in claim 10, **characterized in that** the said swinging frame (9) is mounted for rotation in the said protection case (2) about a transverse pivot pin (10).

12. A biometric integrated system as claimed in claim 11, **characterized in that** the said protection case has a window (8) and the said swinging frame is shaped as a drum sector and has a pair of side walls (9a, 9b), a bridging wall (9c) connecting the said side walls (9a, 9b) and designed to substantially close the said window (8) when the said swinging frame (9) is in its inoperative stand-by position, and a transverse plane wall (9d) provided with an end wing or tab (12) and arranged to locate a capacitative fingerprint sensor (11) having a covering or protection surface (11a) of a dielectric material.

13. A biometric integrated system as claimed in claim 12, **characterized in that** it comprises resilient means arranged to urge the said swinging frame (9) to its inoperative position with its protection surface (11a) facing towards the inside of said case (2).

14. A biometric integrated system as claimed in claim 12 or 13, **characterized in that** it comprises an access area (AA) of a conductive material provided on said case (2) in a position close to the said window (8), and upstream of said end tab (12).

15. A biometric integrated system as claimed in any preceding claim 10 to 14, **characterized in that** it comprises an interface card means (13) arranged to connect the said biometric data base and each capacitative fingerprint sensor (11).

16. A biometric integrated system as claimed in claim 14 or 15, **characterized in that** it comprises at least one electric resistor (14) located in said protection case (2) and arranged to keep the said integrated system above a predetermined temperature threshold.

17. A biometric integrated system as claimed in any preceding claim 14 to 16, **characterized in that** it comprises an electrically operated locking device (15) for said swinging frame (9).

18. A biometric integrated system as claimed in any preceding claim 14 to 17, **characterized in that** it comprises a smart card reading means (16).

19. A biometric integrated system as claimed in any preceding claim 14 to 18, **characterized in that** it comprises a telecamera (17).

20. A biometric integrated system as claimed in any preceding claim 14 to 19, **characterized in that** it comprises a radio transponder sensor means (18).

21. A biometric integrated system as claimed in any preceding claim 15 to 20, **characterized in that** the said interface card means (13) includes a ground connection ESD (19), a cable (20) connecting said ground connection to the said end tab (12), said wall (9d) and said access area (AA), if any, and a start switch (21) arranged to start a routine of a respective fingerprint sensor (11) when the said swinging frame (9) is angularly moved to its operative position.

22. A biometric integrated system as claimed in claim 21, **characterized in that** it comprises at least one alarm means (22).

23. A biometric integrated system as claimed in claim 22, **characterized in that** it comprises at least one serial connection (23) to the said capacitative fingerprint sensor (11) through a cable (24) and serial connection (23).

24. A biometric integrated system as claimed in any preceding claim 10 to 23, **characterized in that** it comprises a c.p.u. (44), a display device (42), at least one RAM memory (41), at least one FLASH memory (40) connected to the said c.p.u (44), and a relay means (49).

25. A biometric integrated system as claimed in claim 24, **characterized in that** it comprises at least one keyboard (43).

26. A biometric integrated system as claimed in any preceding claim 24 or 25, **characterized in that** it comprises at least one luminous led (34) in the said swinging frame (9) and a speaker means (35) designed to instruct the user while carrying our an identification procedure.

27. A biometric integrated system as claimed in any preceding claim 24 to 26, **characterized in that** it comprises a wireless module (1 a) for interfacing each fingerprint sensor (11) to the said c.p.u.(44) through antenna means (29).

28. A biometric integrated system as claimed in any preceding claim 10 to 27, when used for controlling closing and opening of a door (56) provided with an electrically operated locking means (57) and mounted in a access wall (55).

29. A biometric integrated system as claimed in claim 28, **characterized in that** it comprises a first fingerprint sensor (11) arranged on one side of the said access wall (55) and a second fingerprint (1b) arranged on the other side , the said locking means (57) being electrically connected to a relay (49) controlled by said c.p.u. (44).
